(19) Europäisches Patentamt
European Patent Office
Office européen des brevets

(11) Publication number: **0 276 029**
**A2**

(12) # EUROPEAN PATENT APPLICATION

(21) Application number: **88200012.8**

(22) Date of filing: **07.01.88**

(51) Int. Cl.⁴: **C 08 F 8/40**
C 08 F 8/32, D 06 M 15/21

(30) Priority: **13.01.87 NL 8700055**

(43) Date of publication of application:
**27.07.88 Bulletin 88/30**

(84) Designated Contracting States:
**AT BE CH DE ES FR GB IT LI NL SE**

(71) Applicant: **STAMICARBON B.V.**
**P.O. Box 53**
**NL-6160 AB Geleen (NL)**

(72) Inventor: **Pons, Dick Adriaan**
**Fazantstraat 55**
**NL-3145 CA Maassluis (NL)**

**Van Hout, Johannes Barend**
**Industrieweg 60c**
**NL-3044 CC Rotterdam (NL)**

(54) **Curable dispersions.**

(57) The invention relates to a curable dispersion based on a water-dispersed polymer of one or more ethylenically unsaturated monomers with an average molecular weight of between $2 \times 10^5$ and $2 \times 10^5$ daltons, emulsion stabilizers and/or emulsifiers producible by polymerizing in first step an unsaturated monomer carrying an epoxy group together with other monomers and reacting with the epoxy group, in a second step, an amine-, phosphate- or phosphonate compound or mixtures of these comprising at least an organic residue with an acrylate derivative or another α-β-unsaturated compounds, such as a fumaric acid or a styrene derivative.

EP 0 276 029 A2

**Description**

CURABLE DISPERSIONS

The invention relates to a curable dispersion based on a water-dispersed polymer of one or more ethylenically unsaturated monomers with an average molecular weight of between $2 \times 10^5$ and $2 \times 10^6$ daltons, emulsion stabilizers and/or emulsifiers.

US-A-4244850 describes such a dispersion in which, via radical polymerization, ethylenically unsaturated monomers containing epoxy groups or carboxyl groups are polymerized with monomers like ethyl(meth)acrylate, vinyl acetate and ethylene. After the radical polymerization an ethylenically unsaturated compound containing a carboxyl or epoxy group is added with, under the influence of a quaternary ammonium salt as catalyst, an epoxy-carboxylic acid reaction taking place. This coupling reaction takes place at elevated temperature (80°C) for 30 minutes. In this manner ethylenically unsaturated groups are bonded to the polymer, so that the polymers are capable of cross-linking. The coupling reaction, however, is time-consuming. Moreover, there is the risk that, owing to the elevated temperature, the radical reaction will continue and the ethylenically unsaturated groups to be bonded to the polymer will react prematurely.

The object of the invention is to provide such a dispersion, which can be prepared more easily and with greater operational reliability. This is achieved according to the invention in that the polymer contains groups according to formula I or II

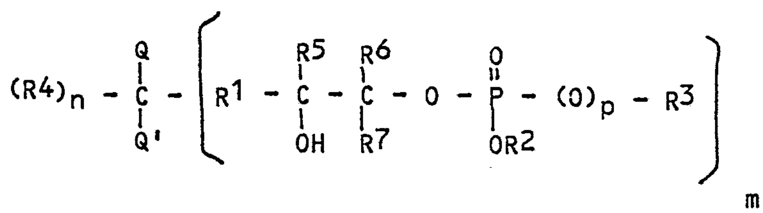

I

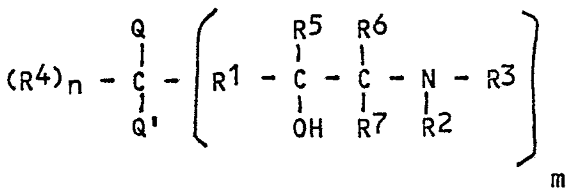

II

m where: m = 1 or 2
n = 2 - m
p = 0 or 1

where Q-Q′ represents the polymer chain and where $R^1$ represents an organic group with 1-10 C-atoms, $R^2$ and $R^3$ represent the same or different H, or an organic group with 1-15 C-atoms, with at least $R^2$ or $R^3$ containing a group according to formula III

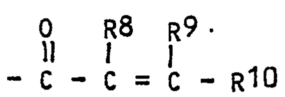

III

where $R^8$ and $R^9$ represent, independently of each other, H or an organic group with 1-4 C-atoms and where $R^{10}$ represents H, $C_1$-$C_4$ alkyl, $CONR^{11}$ or $COOR^{11}$, where $R^{11}$ represents $C_1$-$C_{12}$ alkyl, or with at least $R^2$ or $R^3$ containing a group according to formula IV

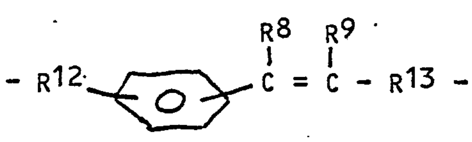

IV

where the group is bonded direct or via $R^{12}$ or via $R^{13}$ to phosphate, phosphonate or amine, where $R^8$ and $R^9$ have the above-mentioned meanings and where the phenyl group may further be substituted with $C_1$-$C_4$ alkyl groups, and where $R^{12}$ or $R^{13}$ represents $C_1$-$C_{12}$ alkyl, and where $R^4$, $R^5$, $R^6$ and $R^7$ may be the same or different and represent H, $C_1$-$C_4$ alkyl or $C_6$-$C_{10}$ aryl.

US-A-4107013 describes UV curable dispersions with allyl groups in the side chains of the polymers. Allyl

groups, however, are less reactive than acrylate groups, so that the curing time is longer than with the dispersions according to the invention.

US-A-4033920 describes UV curable dispersions with acrylate groups in the side chains. These dispersions, however, contain polymers with a relatively low molecular weight and a relatively high acid number, so that no coatings with good properties are obtained.

In the dispersions according to the invention $R^1$ in formula (I) or (II) is preferably

$$-\overset{O}{\overset{\|}{C}}-O-R^{14}- \quad \text{V or}$$

$$-\overset{O}{\overset{\|}{C}}-N-R^{14}- \quad \text{VI}$$

where $R^{14}$ represents an organic group with 1-5 C-atoms.

More particularly $R^{14}$ represents $-CH_2-$.

$R^2$ or $R^3$ is preferably a group according to formula VII or VIII,

$$-\overset{O}{\overset{\|}{C}}-\overset{R^8}{\overset{|}{C}}=CH_2 \qquad \text{VII}$$

$$-C-R^9-O-\overset{O}{\overset{\|}{C}}-\overset{R^8}{\overset{|}{C}}=C \qquad \text{VIII}$$

where $R^8$ and $R^9$ have the above-mentioned meanings.

The polymer on which the dispersion is based normally contains 1-50% (wt) of the group according to formula I or II, preferably 3-30% (wt), and more particularly 5-20% (wt).

A group according to formula I or II is preferably obtained by polymerizing in a first step 1-30% (wt), preferably 2-20% (wt), ethylenically unsaturated and epoxy-containing monomer with other ethylenically unsaturated monomers. The ethylenically unsaturated and epoxy-containing monomer applied may be, for instance, glycidyl acrylate, glycidyl methacrylate, diglycidyl fumarate, diglycidyl maleate, diglycidyl crotonate, diglycidyl itaconate, diglycidyl citraconate, glycidyl cinnamate, 1-(3,4-oxirane) butane(meth)acrylate, 1-(3,4-oxirane)cyclohexane(meth)acrylate and bis [1-(3,4-oxirane)butane] fumarate.

After the radical polymerization a phosphate-, phosphonate-or amine compound is added, or mixtures of these containing at least an organic residue with a (meth)acrylate derivative, or another α-β-unsaturated compound, such as fumaric acid or a styrene derivative. At temperatures between 5°C en 50°C, more preferably at room temperature, these compounds react very rapidly with the epoxy groups present, also without catalyst. Examples of these phosphate-, phosphonate- or amine compounds are mono- and diphosphate esters of hydroxyethyl(meth)acrylate, 1-hydroxypropyl(meth)acrylate, 4-hydroxybutyl(meth)acrylate, 6-hydroxyhexyl(meth)acrylate, dihydroxypropyl(meth)acrylate, mono(meth)acrylate ester of polypropyleneglycol or polyethyleneglycol, mono- or dihydroxyalkylesters of crotonic acid, fumaric acid, itaconic acid, maleic acid or aconitic acid, vinylbenzylalcohol, allylalcohol or N-2-hydroxyethyl(meth)acrylic amide, phosphonates for example (meth)acrylamidomethane phosphonate, styrenephosphonate, vinylphosphonate and allylphosphonate and amine compound for example tertiair-butylaminoethyl(meth)acrylate and 1-vinyl-2-imidazoline. Phosphorus containing compounds can for example be prepared by means of the methods as described in US-A- 4110285 and US-A-4101490.

Hence a preferred method of the invention is a process for preparing a dispersion in which in a radical polymerization step ethylenically unsaturated monomers are polymerized, characterized in that at least a part of the monomers comprises, in addition to an unsaturation, an epoxy group, in which process, after the radical polymerization, a phosphate-, phosphonate- or amine compound, or mixtures of these, is added containing at least an organic residue with a (meth)acrylate derivative or another α-β-unsaturated compound, and these monomers are reacted with epoxy groups at a temperature of between 5 and 50°C.

The polymer further preferably contains 0.5-10% (wt) acid residues, which have -after salt formation - a stabilizing effect on the dispersion. The polymer preferably contains 1-5% (wt) acid.

Examples of copolymerizable monomers with an acid residue are acrylic acid, methacrylic acid, fumaric acid, maleic acid, crotonic acid and itaconic acid.

The above-mentioned monomers can be polymerized together with ethylenically unsaturated monomers which further do not contain a functional group. These are preferably alkyl acrylates, alkyl methacrylates, dialkyl maleates, dialkyl fumarates, vinyl esters such as vinyl acetate, vinyl propionate, vinyl butyrate, vinyl pivalate, vinyl-2-ethylhexoate, vinyl stearate, vinyl laurate, vinyl versatate, vinyl ethers, vinyl chloride, alkenes, sucha as ethylene, propylene, isobutene, butadiene, styrene, vinyl toluene, α-methylstyrene, p-methylstyrene and/or acrylonitrile.

In addition to these monomers other monomers containing hydroxyl groups, such as N-methylol(meth)acrylamide, hydroxyethyl(meth)acrylate, N-butoxy(meth)acrylamide and hydroxypropyl(meth)acrylate can be applied in minor amounts.

Up to 10% (wt) polyunsaturated compounds, such as triallyl cyanurate, divinyl benzene, divinyl maleate, divinyl adipate, vinyl crotonate, ethyleneglycol diacrylate ester and other di- and triacrylate esters, can be used also.

The polymer may further contain groups with emulsifying and adhesion-promoting properties.

The polymer is mostly prepared by means of emulsion polymerization, in which process catalyst systems are used suitable for this reaction, for instance persulphates, hydrogen peroxide, organic peroxides and azo compounds, whether or not in combination with reductants. The temperature during the reaction is mostly between 20 and 90°C, but may be between -15°C and 100°C, in which case antifreeze agents will have to be added with temperatures below 0°C.

During the polymerization other compounds such as chain regulators like mercaptans or buffers like bicarbonate may be present also.

The dispersion further contains emulsion stabilizers and/or emulsifiers. As such preference is given to the use of anionic or nonionic compounds, for an optimum emulsifying effect preference is given to the use of mixtures. Examples of such compounds are salts of alkyl carboxylic acids, alkyl sulphates, alkyl sulphonates, alkyl phosphates, alkyl amines, alkylaryl sulphonates, alkylpolyethyleneglycol ethers, alkylarylpolyethyleneglycol ethers, alkylether sulphates, alkylpolyethyleneglycolethercarboxylic acids, alkylpolyethyleneglycolether phosphates and alkylarylpolyethyleneglycol esters of sulphuric acid and phosphoric acid and alkylarylpolyethyleneglycol ethers of ethercarboxylic acid. Stabilizers with an ethylenic unsaturation can be used also, so that these can be co-polymerized during the radical polymerization.

The polymer has an average molecular weight of between 200,000 and 2,000,000 dalton; if the molecular weight is lower, the properties of the coating produced with a dispersion based on such a polymer are worse, notably in so far as water-resistance and mechanical properties are concerned. A molecular weight higher than $2 \times 10^6$ dalton is technically difficult to realize.

The composition according to the invention can be cured with great advantage under the influence of light. To this end preference is given to using a dispersion comprising an initiator system sensitive to UV light.

The photoinitiators may be the customary homolytic and, via proton abstraction, radicals-generating compounds. Normally a system is used sensitive between 200 and 1000 nm, preferably between 200 and 500 nm. A good overview of the photoinitiators that may be used is given in 'UV, NEB curing formulations for printing inks, coatings and paint, Edited by Dr. R. Holman', published by Sita Technology (London, England). Examples of photoinitiators are, inter alia, benzophenone, with tertiary amines or mercaptans, benzil (ketal), acetophenone derivatives and benzoin derivatives.

It may be advantageous to use a mixture of the above mentioned polymers with relatively low-molecular acrylate-containing compounds. Preference is given to the use of compounds containing acrylate groups. The molecular weight of these compounds is by preference between 300 and 6,000 dalton, more preferably between 580 and 3,000 dalton. According to a preferred embodiment of the invention the prepolymer contains at least two ethylenic unsaturations. According to a further preferred embodiment of the invention the prepolymer comprises at least three terminal acrylate groups. Such an acrylate prepolymer may be aliphatic or aromatic and be di or monofunctional (meth)acrylate-, allyl- or acrylamide- ethylenically unsaturated. The prepolymer may be based on polyesters, polyols, urethanes, melamine, epoxy, acryl and silicone oligomers having a molecular weight, for instance, of between 200 and 2800 daltons. For instance 1,3-butanedioldi(meth)acyrlate, ethyleneglycoldi(meth)acrylate, bisphenol-A-di(meth)acrylate pentaerythritoltri(meth)acrylate, propanedioldi(meth)acrylate, trimethylolpropanetri(meth)acrylate, ethoxylated or propoxylated bisphenol-A-di(meth)acrylate, allyl(meth)acrylate, diallyl(meth)acrylate, diallyfumarate, diallylmaleate, melamine acrylates, triallyltriazine, vinyltrialkoxysilane, triallylcyanurate, 1,6-hexanedioldi(meth)acrylate and divinylbenzene, triallylisocyanurate can be used. Other examples are the reaction product of a substantially OH-terminated polyester based on maleic anhydride and diethyleneglycol and (meth)acrylic acid, a phenolformaldehyde prepolymer with a molecular weight of about 1000 dalton, and sugars, cellulose and starch derivatives, with (meth)acrylic acid or with glycidyl(meth)acrylate. With great advantage may be used also the reaction product of epoxy-terminated prepolymers with (meth)-acrylic acid.

Together with a light-sensitive initiator system and, if so desired, with the usual additives for example thickeners, pigments and anti-foaming agents, the dispersion according to the invention can be used with great advantage as ultraviolet light curing coating for textile, wood, paper, brick, etc.

According to a preferred embodiment of the invention textile is coated by impregnating textile with a curable dispersion according to the invention, by next evaporating water and irradiating the impregnated textile with UV-light.

If the dispersion is used for coatings that must remain flexible at room temperature, preference is given to the use of a polymer having a glass transition temperature (Tg) lower than 20°C, more specifically lower than 0°C.

The invention will be further elucidated by means of the following examples without being limited thereto.

Examples I-XI and comparative experiments A-Z

Dispersions 1-7 were produced by means of a radical polymerization at 80°C-85°C lasting five hours. To 1000 parts by weight monomer 30 parts by weight 10% sodiumpersulphate as catalyst, 33 parts by weight of a

30% solution of the sodium salt of nonylphenol-4eosulphate (eo: ethylene oxide) and 17 parts by weight of a 30% solution of the sodium salt of lauryl-3eo-sulphate were applied. With sodium hydroxide the pH was fixed at 4.5-6.5. The monomers used were butylacrylate (BA), methylmethacrylate (MMA), ethylacrylate (EA), methacrylic acid (MAA) and glycidylmethacrylate (GMA) in the weight proportions according to table 1. The Tg was 0°C for dispersions 1-4 and -20°C for dispersions 5-7.

TABLE 1

| Dispersions | BA | MMA | EA | MAA | GMA |
|---|---|---|---|---|---|
| 1 | 520 | 420 | - | 20 | 40 |
| 2 | 510 | 370 | - | 20 | 100 |
| 3 | 485 | 295 | - | 20 | 200 |
| 4 | - | 130 | 750 | 20 | 100 |
| 5 | 680 | 260 | - | 20 | 40 |
| 6 | 660 | 220 | - | 20 | 100 |
| 7 | 635 | 145 | - | 20 | 200 |

Mixtures according to table 2 were added to dispersions 1-7 at room temperature as represented in table 3. Each time 100 parts by weight dispersion with a solids content of 50% were mixed with mixtures the amounts of which are indicated in brackets.

TABLE 2

| Mixture | parts | |
|---|---|---|
| 1* | 250 | ethanol |
| | 50 | benzophenone |
| | 50 | Darocure 1173 R |
| | 125 | water |
| 2 | 250 | acrylic acid |
| | 36 | nonylphenole-26eo |

TABLE 2 continued

| Mixture | parts | |
|---|---|---|
| 3 | 250 | reaction product of hydroxyethylmethacrylate and $P_2O_5$ |
| | 36 | nonylphenole-26eo |
| 4 | 250 | tertiary-butylaminoethylmethacrylate |
| | 36 | nonylphenol-26eo |
| 5 | 50 | β-styrenephosphonic acid |
| | 200 | ethanol |

* light-sensitive initiator system

TABLE 3

| experiment | dispersion | mixture |
|---|---|---|
| A | 1 | - |
| B | 1 | 1(5) |
| C | 1 | 1(5); 2(2.3) |
| I | 1 | 1(5); 3(2.3) |
| D | 2 | - |
| E | 2 | 1(5) |
| F | 2 | 1(5); 2(5.7) |
| II | 2 | 1(5); 3(5.7) |
| G | 3 | - |
| H | 3 | 1(5); |
| J | 3 | 1(5); 2(2.3) |
| III | 3 | 1(5); 3(2.3) |

TABLE 3 continued

| Experiment | dispersion | mixture |
|---|---|---|
| K | 4 | - |
| L | 4 | 1(5) |
| M | 4 | 1(5); 2(2.3) |
| N | 4 | 1(5); 2(5.7) |
| IV | 4 | 1(5); 3(2.3) |
| V | 4 | 1(5); 3(5.7) |
| VI | 4 | 1(5); 4(2.3) |
| VII | 4 | 1(5); 4(5.7) |
| VIII | 4 | 1(5); 5(10) |
| P | 5 | - |
| Q | 5 | 1(5) |
| R | 5 | 1(5); 2(2.3) |
| IX | 5 | 1(5); 2(2.3) |
| S | 6 | - |
| T | 6 | 1(5) |
| U | 6 | 1(5); 2(5.7) |
| X | 6 | 1(5); 3(5.7) |
| W | 7 | - |
| Y | 7 | 1(5) |
| Z | 7 | 1(5); 2(11.4) |
| XI | 7 | 1(5); 3(11.4) |

After that, each time an 0.2-mm-thick film was produced on glass, which film was dried in an oven at 100¤C for 5 min. Further, the film was subsequently not passed (a), or passed once, 3 or 6 times, on a conveyor belt, under two UV lamps. The energy supplied at one pass was 3.5 J/$cm^2$ (b), at 3 passes 10 J/$cm^2$ (c) and at 6 passes 20 J/$cm^2$ (d). Each of the films thus obtained was subjected to an acetone-resistance test consisting in rubbing a wad of cotton wool soaked in acetone over the film using a pressure of about 2 kg. If within 100 times the film is not totally damaged, a mark is given for the (partly) intact film. Here 1 means poor and 5 excellent. Results are shown in table 4.

TABLE 4

| Experiment | Acetone-resistancetest after: | | | |
| --- | --- | --- | --- | --- |
| | a | b | c | d |
| A | 35 | 30 | 30 | 35 |
| B | 30 | 40 | 30 | 45 |
| C | 15 | 20 | 20 | 30 |
| I | 15 | > 100 (1) | > 100 (2) | > 100 (3) |
| D | 60 | 85 | 90 | 95 |
| E | 90 | 100 | > 100 (1) | > 100 (1) |
| F | 15 | 15 | 50 | 95 |
| II | 90 | > 100 (1) | > 100 (3) | > 100 (3) |
| G | 15 | 15 | 15 | 15 |
| H | 15 | 35 | 30 | 10 |
| J | 15 | 50 | 100 | > 100 (1) |
| III | 15 | > 100 (2) | > 100 (4) | > 100 (4) |
| K | 35 | 25 | 40 | 55 |
| L | 20 | 35 | 35 | 40 |
| M | 35 | 35 | 50 | 65 |
| N | 20 | 35 | 30 | 60 |
| IV | 55 | > 100 (1) | > 100 (2) | > 100 (2) |
| V | 25 | > 100 (2) | > 100 (2) | > 100 (3) |
| VI | 15 | 95 | 95 | > 100 (1) |
| VII | 25 | 75 | > 100 (1) | > 100 (1) |
| VIII | 75 | 75 | > 100 (1) | > 100 (1) |

TABLE 4 continued

| Experiment | Acetone-resistancetest after: | | | |
|---|---|---|---|---|
| | a | b | c | d |
| P | 15 | 40 | 30 | 30 |
| Q | 45 | 80 | 75 | 80 |
| R | 20 | 50 | 35 | 70 |
| IX | 40 | > 100 (1) | > 100 (1) | > 100 (2) |
| S | @ 100 (1) | > 100 (2) | > 100 (2) | > 100 (2) |
| T | > 100 (1) | > 100 (1) | > 100 (1) | > 100 (1) |
| U | 35 | 35 | 70 | 90 |
| X | 50 | > 100 (2) | > 100 (3) | > 100 (4) |
| W | 85 | > 100 (1) | > 100 (1) | > 100 (2) |
| Y | 95 | > 100 (1) | > 100 (2) | > 100 (2) |
| Z | 35 | 95 | > 100 (1) | > 100 (1) |
| XI. | > 100 (1) | > 100 (3) | > 100 (3) | > 100 (4) |

The experiments described above show that the addition of acrylic acid to the polymer carrying epoxy groups has little, or sometimes even a netagive effect on the results of the acetone test. On the other hand, examples I-XI show a definite improvement after the addition of a phosphate, phosphonate or amine derivative carrying an α-β/-ethylenically unsaturated group and the subsequent crosslinking of these mixtures, using UV light.

**Claims**

1. Curable dispersions based on a water-dispersed polymer of one or more ethylenically unsaturated monomers with an average molecular weight of between $2 \times 10^5$ and $2 \times 10^6$ daltons, emulsion stabilizers and/or emulsifiers, characterized in that the polymer contains groups according to formula I or II

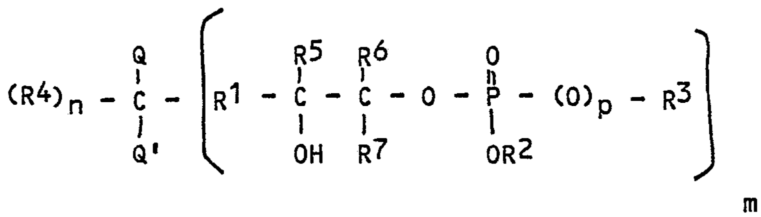 I

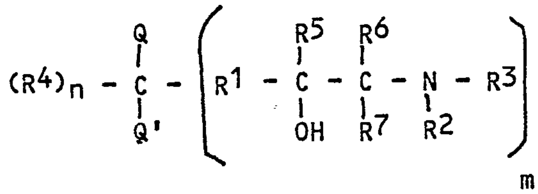 II

where m = 1 or 2
n = 2 - m
p = 0 or 1
where Q-Q′ represents the polymer chain and where $R^1$ represents an organic group with 1-10 C-atoms, $R^2$ and $R^3$ represent the same or different H, or an organic group with 1-15 C-atoms, with at least $R^2$ or $R^3$ comprising a group according to formula III

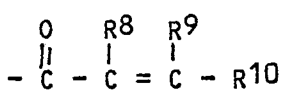 III

where $R^8$ and $R^9$ represent, independently of each other, H or an organic group with 1-4 C-atoms and where $R^{10}$ represents H, $C_1$-$C_4$ alkyl, $CONR^{11}$ or $COOR^{11}$, where $R^{11}$ represents $C_1$-$C_{12}$ alkyl, or according to formula IV

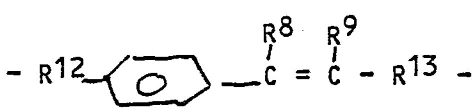 IV

where the group (IV) is bonded direct or via $R^{12}$ or $R^{13}$ to phosphate, phosphonate or amine, where $R^8$ and $R^9$ have the abovementioned meanings and where the phenyl group may further be substituted with $C_1$-$C_4$ alkyl groups and where $R^{12}$ or $R^{13}$ represents $C_1$-$C_{12}$ alkyl, and where $R^4$, $R^5$, $R^6$ and $R^7$ may be the same or different and represent H, $C_1$-$C_4$ alkyl or $C_6$-$C_{10}$ aryl.

2. Dispersion according to claim 1, characterized in that $R^1$ represents a group according to formula V or VI:

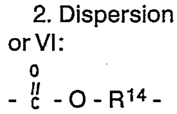 V

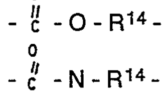 VI

where $R^{14}$ represents an organic group with 1-5 C-atoms.

3. Dispersion according to any one of claims 1-2, characterized in that $R^2$ or $R^3$ represents a group according to formula VII

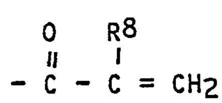 VII

where $R^8$ has the meaning described above.

4. Dispersion according to any one fo claims 1-2, characterized in that $R^2$ or $R^3$ represents a group according to formula VIII

$$-CH-R^9-O-\overset{\overset{O}{\|}}{C}-\overset{\overset{R^8}{|}}{C}=CH_2 \qquad VIII$$

where $R^8$ and $R^9$ have the meanings described above.

5. Dispersion according to any one of claims 1-4, characterized in that for 1-50% (wt) the polymer comprises groups according to formula I or II.

6. Ultraviolet light curable coating composition based on a dispersion according to any one of claims 1-5 and a photoinitiator system.

7. Composition according to claim 6, characterized in that the dispersion also contains a prepolymer with a molecular weight of between 300 and 6000 daltons, which contains at least two ethylenic unsaturations.

8. Process for preparing a dispersion in which in a radical polymerization step ethylenically unsaturated monomers are polymerized, characterized in that at least a part of the monomers comprises, in addition to an unsaturation, an epoxy group, in which process, after the radical polymerization, a phosphate-, phosphonate- or amine compound, or mixtures of these, is added containing at least an organic residue with a (meth)acrylate derivative or another α-β-unsaturated compound, and these monomers are reacted with epoxy groups at a temperature of between 5°C and 50°C.

9. Process for coating textile by impregnating textile with a curable dispersion, characterized in that a dispersion is used according to any one of claims 1-5, water is evaporated and the impregnated textile is irradiated with UV light.

10. Polymer of one or more ethylenically unsaturated monomers with an average molecular weight of between $2 \times 10^5$ and $2 \times 10^6$ daltons, emulsion stabilizers and/or emulsifiers, characterized in that the polymer contains groups according to formula I or II as indicated above.